# EUROPÄISCHE PATENTSCHRIFT

(11) **EP 1 112 666 B1**
(45) Veröffentlichungstag und Bekanntmachung des Hinweises auf die Patenterteilung: **04.04.2007**
(21) Anmeldenummer: 99955670.7
(22) Anmeldetag: 07.09.1999
(51) Int. Cl.: H04Q 7/38

(54) **VERFAHREN ZUR ERHÖHUNG DER SICHERHEIT VON AUTHENTISIERUNGSVERFAHREN IN DIGITALEN MOBILFUNKSYSTEMEN**
METHOD FOR IMPROVING THE SECURITY OF AUTHENTICATION PROCEDURES IN DIGITAL MOBILE RADIO TELEPHONE SYSTEMS
PROCEDE DE RENFORCEMENT DE LA SECURITE DE PROCEDURES D'AUTHENTIFICATION DANS DES SYSTEMES RADIOMOBILES NUMERIQUES

(30) Priorität: 07.09.1998 DE 19840742
(43) Veröffentlichungstag der Anmeldung: 04.07.2001
(73) Patentinhaber: T-Mobile Deutschland GmbH, 53227 Bonn (DE)
(72) Erfinder: HAKE, Jens, D-09240 Kemtau (DE); THELEN, Jörg, D-53227 Bonn (DE)
(74) Vertreter: Riebling, Peter
(86) Internationale Anmeldenummer: PCT/DE1999/002836
(87) Internationale Veröffentlichungsnummer: WO 2000/014895

(56) Entgegenhaltungen:
- EP-A- 0 506 637
- EP-A- 0 653 895
- US-A- 5 661 806

## Beschreibung

Die Erfindung betrifft ein Verfahren zur Erhöhung der Sicherheit von Authentisierungsverfahren in digitalen Mobilfunksystemen nach dem Oberbegriff des Patentanspruchs 1.

Moderne Mobilfunknetze beinhalten spezielle Sicherheitsmassnahmen, die einen Missbrauchsschutz von Betriebsmitteln durch andere, als die autorisierten Teilnehmer, sowie Schutz vor einem möglichen Abhören der Funkschnittstelle beinhalten. Die Sicherheitsmassnahmen beziehen sich dabei auf den Schutz der Beziehung zwischen Mobilfunknetz und autorisiertem Teilnehmer. Ein spezielles Verfahren zur Authentisierung der Teilnehmer soll verhindern, dass ein Dritter die Identität eines autorisierten Teilnehmers vortäuschen kann. Ein Teilnehmer muss sich dazu mittels der auf seinem Teilnehmeridentitätsmodul (SIM) gespeicherten Daten und Funktionen gegenüber dem Mobilfunknetz authentifizieren. Es hat sich in der Vergangenheit immer wieder gezeigt, dass das Kompromitieren von Authentisierungsverfahren, d.h. das Ausspähen des geheimen Schlüssels KI des Teilnehmers mit entsprechendem Fachwissen und geeigneten Gerätschaften möglich ist, indem Folgen von den bei der Authentisierung verwendeten Zufallszahlen und Antwortzahlen, d.h. RAND/SRES-Paaren, in grosser Anzahl mathematischen Verfahren unterzogen werden, um den geheimen Schlüssel KI eines Teilnehmers zu ermitteln. Ist der geheime Schlüssel KI erst einmal ermittelt, ist eine illegale Duplizierung von Teilnehmeridentitätsmodulen (SIMs) möglich.

Bei dem derzeit angewendeten Authentisierungsverfahren ermittelt das Mobilfunknetz mit speziellen Algorithmen und einem SIM-spezifischen, geheimen Schlüssel KI aus einem Zufallswert RAND ein Authentisierungsergebnis SRES und einen temporären Schlüssel KC. Dabei hält das Mobilfunknetz eine bestimmte Anzahl von RAND/SRES/KC-Triplets vor. Will sich ein Teilnehmer einbuchen, sendet das Mobilfunknetz eine Zufallszahl RAND an das Teilnehmeridentitätsmodul SIM. Die SIM ermittelt mit dem gleichen, speziellen Algorithmus und seinem SIM-spezifischen, geheimen Schlüssel KI ein dazugehörendes SRES/KC-Paar und sendet die ermittelte SRES zurück an das Mobilfunknetz. Das Mobilfunknetz vergleicht die empfangene SRES mit der vorgehaltenen SRES auf Übereinstimmung, wobei bei Übereinstimmung der Teilnehmer als authentifiziert gilt. Der auf beiden Seiten berechnete Schlüssel KC wird auf beiden Seiten zur Verschlüsselung der Übertragung verwendet.

Wie gesagt besteht bei dem derzeit verwendeten Verfahren die Möglichkeit, den Schlüssel KI auszuspähen, um so unbefugt Zugang zum Mobilfunknetz zu erhalten.

Um ein Ausspähen des geheimem Schlüssels zu erschweren, werden in der EP-A-0 506 637 Authentisierungsverfahren vorgeschlagen, die auf einer gleichzeitigen Verwendung von zwei geheimen Schlüsseln beruhen, einem festen Schlüssel und einem veränderlichen Schlüssel. Beide Schlüssel sind sowohl im Mobilfunknetz als auch in der Mobilstation bzw. einem Teilnehmermodul (SIM) gespeichert. Beide Schlüssel werden sowohl im Mobilfunknetz als auch in der Mobilstation einem Authentisierungsalgorithmus unterzogen, wobei dort für beide Schlüssel jeweils ein Authentisierungsergebnis ermittelt wird. Die von der Mobilstation ermittelten Authentisierungsergebnisse werden an das Mobilfunknetz übertragen und mit den dort ermittelten Authentisierungsergebnissen verglichen. Stimmen die Ergebnisse überein, war die Authentisierung erfolgreich. In einem abgewandelten Verfahren wird vorgeschlagen die beiden Authentisierungsergebnisse in der Mobilstation nach einem bestimmten Verfahren zu kombinieren, so dass nur ein Ergebnis zur Überprüfung an das Mobilfunknetz übertragen werden muss.

Ein anderes Authentisierungsverfahren ist in der EP-A-0 653 895 offenbart. Dieses Verfahren beruht auf der Übermittlung mindestens eines Schlüssels von der Mobilstation zum Mobilfunknetz, welcher Schlüssel vom Benutzer selbst direkt über die Tastatur der Mobilstation eingegeben wird. Der übermittelte Schlüssel wird mit einem im Mobilfunknetz gespeicherten Schlüssel verglichen. Stimmen beide Schlüssel überein, ist die Authentisierung erfolgreich. Ein auf der Mobilstation oder einem Teilnehmeridentitätsmodul gespeicherter fester Schlüssel kann zusätzlich zur Authentisierung verwendet werden.

Der vorliegenden Erfindung liegt die Aufgabe zugrunde, ein Verfahren zur Erhöhung der Sicherheit von Authentisierungsverfahren in digitalen Mobilfunksystemen vorzuschlagen, durch welches das Ausspähen des geheimen Schlüssels nahezu unmöglich wird.

Diese Aufgabe wird durch die kennzeichnenden Merkmale des Patentanspruchs 1 gelöst.

Die Erfindung beruht nun darauf, dass im Mobilfunknetz und auf dem Teilnehmeridentitätsmodul mehrere verschiede geheime, SIM-spezifische Schlüssel KI vorgehalten werden, und bei der Authentisierung zwischen Teilnehmeridentitätsmodul und Mobilfunknetz aus den mehreren vorgehaltenen geheimen Schlüsseln ein Schlüssel für die Durchführung der Authentisierung ausgewählt wird.

Der Vorteil dieses Verfahrens liegt darin, dass ein Kompromitieren, d.h. ein Ausspähen des geheimen Schlüssels KI der SIM wesentlich erschwert wird, da für den Angreifer nicht vorhersehbar und nicht erkennbar ist, welcher geheime Schlüssel KI von der SIM zur Errechnung der SRES-Antwort verwendet wurde.

Weiterer wesentlicher Vorteil dieses Verfahrens ist, dass eine Änderung an den Schnittstellen des Mobilfunknetzes, insbesondere der Luftschnittstelle, nicht erforderlich ist, und ebenso keine Änderungen an den Endgeräten vorgenommen werden müssen. Es sind lediglich lokale softwaretechnische Änderungen an einzelnen Netzkomponenten des Mobilfunknetzes sowie auf der SIM erforderlich, die mit geringem Aufwand und nahezu ohne zusätzliche Kosten durchführbar sind.

Vorteilhafte Weiterbildungen und Ausführungsformen der Erfindung sind in den abhängigen Patentansprüchen angegeben.

Vorteilhaft erfolgt die Auswahl des verwendeten Schlüssels KI durch die SIM nach dem Zufallsprinzip.

In einer bevorzugten Ausführung ermittelt das Mobilfunknetz mit speziellen Algorithmen unter Vorgabe jeweils einer Zufallszahl RAND für alle SIM-spezifischen Schlüssel KI eines Teilnehmers ein SRES/KC-Paar und bildet mit dem jeweils verwendeten RAND die sogenannten RAND/SRES/KC-Triplets. Diese Triplets werden im Mobilfunknetz vorgehalten und sind für zukünftige Authentisierungsprozeduren abrufbar.

Zur Initiierung einer Authentisierung sendet das Mobilfunknetz einen Zufallswert RAND eines dieser Triplets an das Teilnehmer-Identitätsmodul SIM, wobei das Teilnehmeridentitätsmodul anhand der übermittelten RAND einen verfügbaren Schlüssel auswählt und anhand dieses ausgewählten Schlüssels KI die zugehörigen Werte für die Antwort SRES und den Schlüssel KC berechnet und die Antwort SRES an das Mobilfunknetz zurücksendet.

Im Mobilfunknetz findet nun ein Vergleich auf Übereinstimmung der empfangenen Antwort SRES mit allen für den verwendeten RAND vorgehaltenen SRES-Werten statt, wobei wenn eine Übereinstimmung zwischen zwei teilnehmerspezifischen Antworten SRES vorliegt der Teilnehmer als authentisiert gilt.

Vorteilhaft wird das Mobilfunknetz nun den zu den übereinstimmenden SRES gehörenden KC zur Verschlüsselung der Übertragung verwenden, wobei der identische Schlüssel KC in der SIM vorliegt und auch dort zur Verschlüsselung der Übertragung verwendet wird.

Nachfolgend wird ein Ausführungsbeispiel der Erfindung anhand einer Zeichnungsfigur näher erläutert. Dabei gehen aus der Zeichnung und der zugehörigen Beschreibung weitere Merkmale und Vorteile der Erfindung hervor.

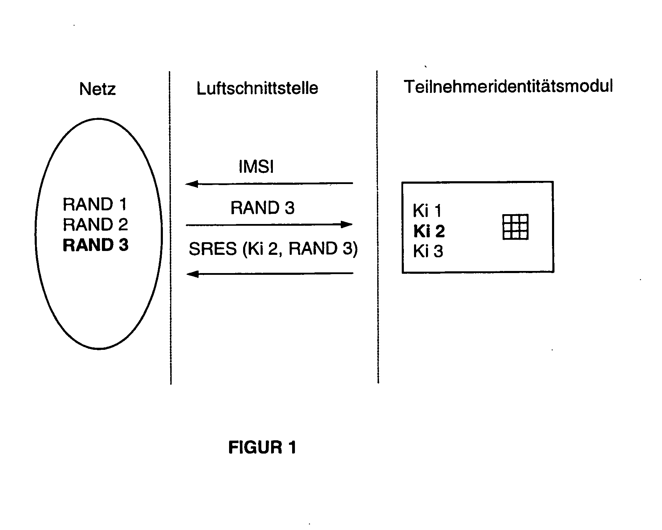

Figur 1 zeigt in vereinfachter Darstellung eine Authentisierungsprozedur nach dem erfindungsgemässen Verfahren. Zur Durchführung des Verfahrens müssen für jeden Teilnehmer im Mobilfunknetz als auch auf der teilnehmerspezifischen SIM mehrere geheime Schlüssel KI abgelegt sein.

**Mobilfunknetz: Teilnehmer X**

| | KI 1 | KI 2 | KI 3 |
|---|---|---|---|
| RAND 1 | SRES/KC (1,1) | SRES/KC (1,2) | SRES/KC (1,3) |
| RAND 2 | SRES/KC (2,1) | SRES/KC (2,2,) | SRES/KC (2,3) |
| RAND 3 | SRES/KC (3,1) | SRES/KC (3,2) | SRES/KC (3,3) |
| ... | ... | ... | ... |

Wie die obenstehende Tabelle zeigt sind im Mobilfunknetz für jeden Teilnehmer X beispielsweise drei geheime Schlüssel KI abgelegt, wobei nun das Mobilfunknetz unter Vorgabe von mehreren Zufallszahlen RAND 1, RAND 2 und RAND 3 die für jeweils die geheimen Schlüssel KI 1, KI 2 und KI 3 zugehörigen SRES-Antworten und Schlüssel KC berechnet und abspeichert.

Auch im Teilnehmeridentitätsmodul für den Teilnehmer X sind die drei möglichen Schlüssel KI 1, KI 2 und KI 3 abgelegt.

Will sich der Teilnehmer X nun im Mobilfunknetz einbuchen, so muss zunächst die Authentisierungsprozedur durchgeführt werden, wie sie in Figur 1 angedeutet ist. Dazu sendet das Teilnehmeridentitätsmodul über ein entsprechendes Endgerät zunächst die Teilnehmeridentitätsnummer IMSI an das Mobilfunknetz. Wird diese IMSI als zulässig erkannt, dann wählt das Mobilfunknetz aus den für den Teilnehmer X vorgehaltenen Zufallswerten RAND einen Zufallswert, hier beispielsweise RAND 3, aus und sendet diesen zurück an das Teilnehmeridentitätsmodul. Das Teilnehmeridentitätsmodul wählt wiederum einen der teilnehmerspezifischen, geheimen Schlüssel KI aus, beispielsweise KI 2, und berechnet aus der vom Mobilfunknetz erhaltenen RAND 3 und dem KI 2 die zugehörige SRES-Antwort und den Schlüssel KC. Die SRES-Antwort, die aus dem Schlüssel KI 2 und der RAND 3 gebildet wurde, wird wieder zurück an das Mobilfunknetz gesendet und dort mit dem vorgehaltenen SRES-Wert für KI 2 und RAND 3 verglichen. Stimmen diese SRES-Werte überein, so gilt der Teilnehmer als authentisiert und kann sich in das Mobilfunknetz einbuchen. Der auf beiden Seiten vorliegende Schlüssel KC wird während der neu hergestellten Verbindung zur Verschlüsselung der Datenübertragung verwendet.

## Patentansprüche

1. Verfahren zur Authentisierung in digitalen Mobilfunksystemen, wobei im Mobilfunknetz und auf einem Teilnehmeridentitätsmodul (SIM) mehrere verschiedene geheime, SIM-spezifische Schlüssel (KI) vorgehalten werden, **dadurch gekennzeichnet,**
**daß** bei der Authentisierung zwischen Teilnehmeridentitätsmodul (SIM) und Mobilfunknetz von der SIM aus den mehreren, vorgehaltenen geheimen Schlüsseln ein Schlüssel (KI) für die Durchführung der Authentisierung ausgewählt wird.

2. Verfahren nach Anspruch 1, **dadurch gekennzeichnet, daß** die Auswahl des Schlüssels (KI) durch das Teilnehmeridentitätsmodul SIM nach dem Zufallsprinzip erfolgt.

3. Verfahren nach Anspruch 1 oder 2, **dadurch gekennzeichnet, daß** das Mobilfunknetz mit speziellen Algorithmen unter Vorgabe einer Zufallszahl (RAND) für alle SIM-spezifischen Schlüssel (KI) ein SRES/KC-Paar ermittelt, die mit dem jeweiligen RAND RAND/SRES/KC-Triplets bilden.

4. Verfahren nach einem der Ansprüche 1 bis 3, **dadurch gekennzeichnet, daß** die gebildeten RAND/SRES/KC-Triplets im Mobilfunknetz vorgehalten werden.

5. Verfahren nach einem der Ansprüche 1 bis 4, **dadurch gekennzeichnet, daß** vom Mobilfunknetz zur Initiierung einer Authentisierung ein RAND eines dieser Triplets an das Teilnehmeridentitätsmodul gesendet wird.

6. Verfahren nach einem der Ansprüche 1 bis 5, **dadurch gekennzeichnet, daß** das Teilnehmeridentitätsmodul anhand der übermittelten RAND und dem ausgewählten Schlüssel (KI) die zugehörigen Werte für SRES und KC berechnet, und die ermittelte Antwort an das Mobilfunknetz sendet.

7. Verfahren nach einem der Ansprüche 1 bis 6, **dadurch gekennzeichnet, daß** im Mobilfunknetz ein Vergleich auf Übereinstimmung der empfangenen SRES mit allen für den verwendeten RAND vorgehaltenen SRES stattfindet.

8. Verfahren nach einem der Ansprüche 1 bis 7, **dadurch gekennzeichnet, daß** das Mobilfunknetz und die SIM den zu dem übereinstimmenden SRES gehörenden KC zur Verschlüsselung der Übertragung verwendet.

## Claims

1. Method for authentication in digital mobile radio systems, wherein several different secret, SIM-specific keys (KI) are held in the mobile radio network and on a subscriber identity module (SIM), **characterised in that** during authentication between the subscriber identity module (SIM) and the mobile radio network a key (KI) is selected by the SIM from the several, stored secret keys to carry out the authentication.

2. Method according to claim 1, **characterised in that** the selection of the key (KI) is done by the subscriber identity module SIM on the random principle.

3. Method according to claim 1 or 2, **characterised in that**, with special algorithms with default of a random number (RAND), the mobile radio network determines a SRES/KC pair for all the SIM-specific keys (K1), which forms RAND/SRES/KC triplets with the respective RAND.

4. Method according to one of claims 1 to 3, **characterised in that** the RAND/SRES/KC triplets formed are stored in the mobile radio network.

5. Method according to one of claims 1 to 4, **characterised in that** a RAND of one of these triplets is sent to the subscriber identity module by the mobile radio network to initiate authentication.

6. Method according to one of claims 1 to 5, **characterised in that** the subscriber identity module calculates the associated values for SRES and KC using the transmitted RAND and the selected key (KI) and sends the determined answer to the mobile radio network.

7. Method according to one of claims 1 to 6, **characterised in that** in the mobile radio network a comparison takes place for matching of the received SRES with all the SRES stored for the RAND used.

8. Method according to one of claims 1 to 7, **characterised in that** the mobile radio network and the SIM use the KC belonging to the matching SRES for encrypting the transmission.

## Revendications

1. Procédé d'authentification dans des réseaux radiotéléphoniques mobiles numériques, plusieurs clés confidentielles différentes (KI) propres à un module d'identité d'abonné (SIM) étant conservées dans le réseau mobile et sur le SIM, **caractérisé en ce que** lors de l'authentification entre le module d'identité d'abonné (SIM) et le réseau mobile, le SIM sélectionne parmi les différentes clés confidentielles conservées une clé (KI) pour effectuer l'authentification.

2. Procédé selon la revendication 1, **caractérisé en ce que** la sélection de la clé (KI) par le module d'identité d'abonné SIM se fait selon le principe aléatoire.

3. Procédé selon la revendication 1 ou 2, **caractérisé en ce que** le réseau mobile détermine à l'aide d'algorithmes spéciaux, avec par défaut un nombre aléatoire (RAND) pour toutes les clés (KI) propres au SIM, une paire SRES/KC qui forme avec le nombre RAND des triplets RAND/SRES/KC.

4. Procédé selon l'une des revendications 1 à 3, **caractérisé en ce que** les triplets RAND/SRES/KC formés sont conservés dans le réseau mobile.

5. Procédé selon l'une des revendications 1 à 4, **caractérisé en ce que** le réseau mobile, pour lancer une authentification, envoie un nombre RAND de l'un de ces triplets au module d'identité d'abonné.

6. Procédé selon l'une des revendications 1 à 5, **caractérisé en ce que** le module d'identité d'abonné calcule les valeurs correspondantes pour SRES et KC à l'aide du nombre RAND transmis et de la clé (KI) sélectionnée, et envoie la réponse déterminée au réseau mobile.

7. Procédé selon l'une des revendications 1 à 6, **caractérisé en ce qu'**une comparaison a lieu dans le réseau mobile pour voir si le SRES reçu concorde avec tous les SRES conservés pour le nombre RAND utilisé.

8. Procédé selon l'une des revendications 1 à 7, **caractérisé en ce que** le réseau mobile et le SIM utilisent pour le chiffrage de la transmission la clé KC appartenant au SRES concordant.
